(19) **Europäisches Patentamt**

**European Patent Office**

**Office européen des brevets**

(11) Veröffentlichungsnummer: **0 306 634**
**A2**

(12) **EUROPÄISCHE PATENTANMELDUNG**

(21) Anmeldenummer: 88109564.0

(22) Anmeldetag: 26.08.86

(51) Int. Cl.4: **F01D 25/18 , F01D 11/00 , F16N 31/00 , F16C 33/74**

(30) Priorität: 09.09.85 DE 3532043
29.11.85 DE 3542316

(43) Veröffentlichungstag der Anmeldung:
15.03.89 Patentblatt 89/11

(60) Veröffentlichungsnummer der früheren
Anmeldung nach Art. 76 EPÜ: **0 222 991**

(84) Benannte Vertragsstaaten:
AT CH DE LI NL

(71) Anmelder: **Siemens Aktiengesellschaft Berlin und München**
**Wittelsbacherplatz 2**
**D-8000 München 2(DE)**

(72) Erfinder: **Oeynhausen, Heinrich, Dr.**
**Schaaphausstrasse 34 a**
**D-4330 Mülheim/Ruhr(DE)**
Erfinder: **Memmel, Karlheinz**
**Eschenbachstrasse 12**
**D-4330 Mülheim/Ruhr(DE)**
Erfinder: **Winkelhake, Ernst**
**Südstrasse 65**
**D-4630 Bochum 6(DE)**

(54) Berührungsfreie Wellendichtung mit Lecköl-Abführung.

(57) Einrichtung zur lecköl-freien Lageröl-Abführung an Gleitlagern für umlaufende Wellen (1) hochtouriger Maschinen, insbesondere solchen für Turbomaschinen, mit berührungsfreier Wellendichtung (7) gegen Austritt des den Gleitlagerflächen (1.1, 2.1) unter Druck zugeführten Lageröls nach außen im Bereich der beiden Lagerstirnseiten und mit einem im Bereich wenigstens einer Lagerstirnseite innerhalb des von den Wellendichtungen (7) umgrenzten Lagerinnenraumes (8) angeordneten, die Welle (1) auf einer begrenzten axialen Länge umgebenden Ölsammel-Ringkanal (8.1), der über eine Ölaustrittsöffnung in eine Ölauffangeinrichtung (10) mündet, welche mit dem Lagerölkreislauf in Verbindung steht. Zur Bildung der Ölaustrittsöffnung ist die Außenumfangswand (80) des Ölsammel-Ringkanals (8.1) auf einem Bogenstück in Form eines schlitzförmigen Öffnungsbogens (90) ausgespart. Der Öffnungsbogen überstreicht einen Umfangswinkelbereich ( α ) der Welle (1), der wenigstens beim geodätisch tiefsten Punkt (82.2) der Ringkanal-Außenkontur (82) beginnt und sich - in Wellendrehrichtung (f3) gesehen - höchstens bis zu jener Stelle der Ringkanal-Außenkontur erstreckt, die durch die Lagerschalenteilfuge (200) begrenzt ist. An den Öffnungsbogen (90) ist ein Ölauffangkasten (100) dichtend angeschlossen, welcher zwecks Ölstrom-Unterteilung und Ableitung mittels tangential-bogenförmig verlaufender Leitwände (103a.....103d) in mehrere parallel geschaltete Ölströmungskanäle (102.1....102.3) unterteilt ist.

FIG 2

## Berührungsfreie Wellendichtung mit Lecköl-Abführung

Die Erfindung bezieht sich auf eine Einrichtung zur lecköl-freien Lageröl-Abführung an Gleitlagern für umlaufende Wellen hochtouriger Maschinen, insbesondere solchen für Turbomaschinen, gemäß Oberbegriff des Anspruchs 1. Bekannte Gleitlager für Turbomaschinen, insbesondere Dampfturbinen - dabei kann es sich um Radiallager, Axiallager oder kombinierte Radial-Axial-Lager handeln -, weisen im allgemeinen im Bereich der beiden Lagerstirnseiten berührungsfreie Wellendichtungen gegen Austritt des den Gleitlagerflächen unter Druck zugeführten Lageröls nach außen auf. Hierbei stellt ein besonderes Problem die Dichtigkeit der Wellendichtung dar; diese soll möglichst leckölfrei sein. Eng im Zusammenhang mit dieser angestrebten Leckölfreiheit steht das Problem der Abführung des Lageröls. Dazu wiesen die Gleitlager wenigstens auf einer Seite einen Ölsammel-Ringkanal auf. Dieser Ölsammel-Ringkanal mündet über wenigstens eine Austrittsöffnung ein eine Ölauffangeinrichtung, welch letztere wiederum mit dem Lagerölkreislauf in Verbindung steht.

Das Problem der staufreien Lagerölabführung, und zwar in einem weiten Drehzahlbereich vom Stillstand (Anfahren) bis hin zur Betriebsdrehzahl, stellt sich besonders bei gleitgelagerten Wellen hochtouriger Maschinen, bei denen eine hohe Umfangsgeschwindigkeit an der Lagerstelle von z. B. 40 m/Sek im Betriebsfalle herrscht. Darunter fallen deshalb vor allem Turbomaschinen, und hier insbesondere die Dampfturbinen, deren Betriebsdrehzahl in aller Regel entweder bei 1500 U/Min (Kernkraftmaschinen) oder bei 3000 U/Min (Dampfturbinen für konventionelle Kraftwerke) liegen. In den USA sind die entsprechenden Drehzahlen wegen der 60 Hertz-Netzfrequenz 1800 bzw. 3600 U/Min. Bei diesen hohen Umfangsgeschwindigkeiten der Welle wird das Lageröl vom Wellenumfang abgeschleudert und neigt zu starker Schaumbildung. Es muß zügig abgeführt werden, weil sich ansonsten im Ölsammelringkanal ein Ölstau ausbilden könnte.

Der Erfindung liegt die Aufgabe zugrunde, die gattungsgemäße Einrichtung so auszubilden, daß mit ihr in allen Betriebszuständen, d. h. in dem Gesamtbereich der möglichen Drehzahlen, angefangen vom Stillstand über die Turndrehzahl bis hin zur Betriebsdrehzahl, eine zügige Abführung des von den Gleitlagerflächen abströmenden Lageröls gewährleistet ist. Insbesondere soll die Einrichtung diese zügige Abführung trotz Ölschaumbildung unter Vermeidung jeglichen Ölstaues gewährleisten.

Erfindungsgemäß wird die gestellte Hauptaufgabe durch die im Kennzeichen des Anspruchs 1 angegebenen Merkmale gelöst. Vorteilhafte Weiterbildungen sind in den Ansprüchen 2 bis 6 angegeben

Die mit der Erfindung erzielbaren Vorteile sind vor allem darin zu sehen, daß das Öl sowohl im Stillstand, bei Turndrehzahl und in dem gesamten Drehzahlbereich bis hin zur Betriebsdrehzahl von den Leitwänden des Ölauffangkastens in einen nach unten gerichteten Ablaufkanal umgelenkt wird, wobei von den fächerartig angeordneten Leitwänden mit zunehmender Wellendrehzahl die in Wellendrehrichtung gesehen höher gelegenen mehr und mehr zur Wirkung kommen, während bei niedrigeren Drehzahlen die unteren Leitbleche wirksam sind. Dadurch kann eine zügige Abführung des Ölschaumes begünstigt und Wirbelbildung innerhalb der Ölströmung vermieden werden. Der Ölauffangkasten mündet insbesondere in einen vertikalen Ölablaufkanal, der seinerseits in das Lagergehäuse mündet, von wo das Öl dem Ölsammelbehälter zugeführt wird. Noch günstiger ist jedoch ein direkter Anschluß an die Ölablaufleitung zum Ölsammelbehälter. Hierdurch wird die der Luft ausgesetzte Oberfläche der Ölströmung wesentlich verringert (kein Sprühöl und keine Ölnebel im Lagergehäuse), was wiederum den Aufwand an Ölaufbereitung vermindert bzw. auch die Lebensdauer des Lageröls vergrößert.

Im folgenden wird anhand eines in der Zeichnung dargestellten Ausführungsbeispiels die Erfindung noch näher erläutert.

Darin zeigt:

Fig. 1 einen Schnitt nach der Linie I-I aus Fig. 2 durch ein in seinen äußeren Umrissen angedeutetes Traglager einer Dampfturbinenwelle, wobei jedoch die am rechten Ende des Traglagers angeordnete Einrichtung nach der Erfindung detaillierter gezeichnet ist;

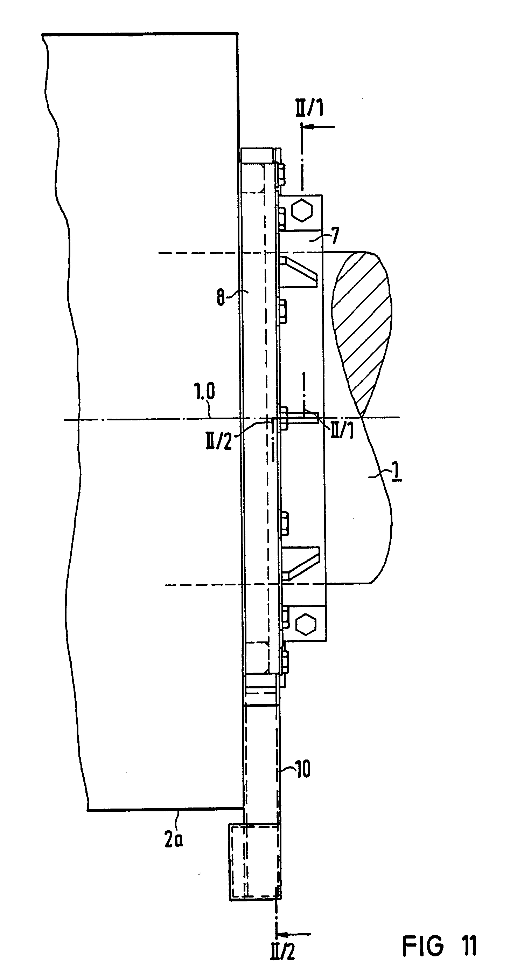

Fig. 2 einen Gesamtschnitt II-II, unterteilt in die beiden axial gegeneinander versetzten Halbschnitte nach den Linien II/1-II/1 und II/2-II/2 aus Fig. 11, wobei die Ebenen II/1-II/1 und II/2-II/2 der beiden Halbschnitte zum besseren Verständnis auch in Fig. 1 eingezeichnet sind;

Fig. 3 den Schnitt nach der Linie III-III aus Fig. 1 durch die Lecköl-Sammelkammer;

Fig. 4 die Ansicht IV aus Fig. 1 auf die innerhalb des Ölsammel-Ringkanals im Ölhauptstrom angeordneten Saughütchen;

Fig. 5 den Schnitt V-V aus Fig. 2 durch den Ölauffangkasten;

Fig. 6 den Querschnitt nach der Linie VI-VI aus Fig. 2 durch die Lecköl-Sammelkammer;

Fig. 7 die Ansicht VII aus Fig. 2 der beiden Ringhälften für die Labyrinth-Dichtungskammer;

Fig. 8 in Ansicht ein hohlgebohrtes und angespitztes Zylinderstück, aus welchem durch Zerteilen in der Achsebene zwei Saughütchen gewonnen werden können;

Fig. 9 die Seitenansicht des Zylinderstückes nach Fig. 8;

Fig. 10 ein einzelnes Saughütchen in perspektivischer Darstellung in seiner Arbeitsposition mit schematisch angedeuteter Ölströmung und

Fig. 11 eine Draufsicht auf die Einrichtung nach Fig. 1 und 2 in Richtung des Pfeiles XI aus Fig. 2, im Ausschnitt.

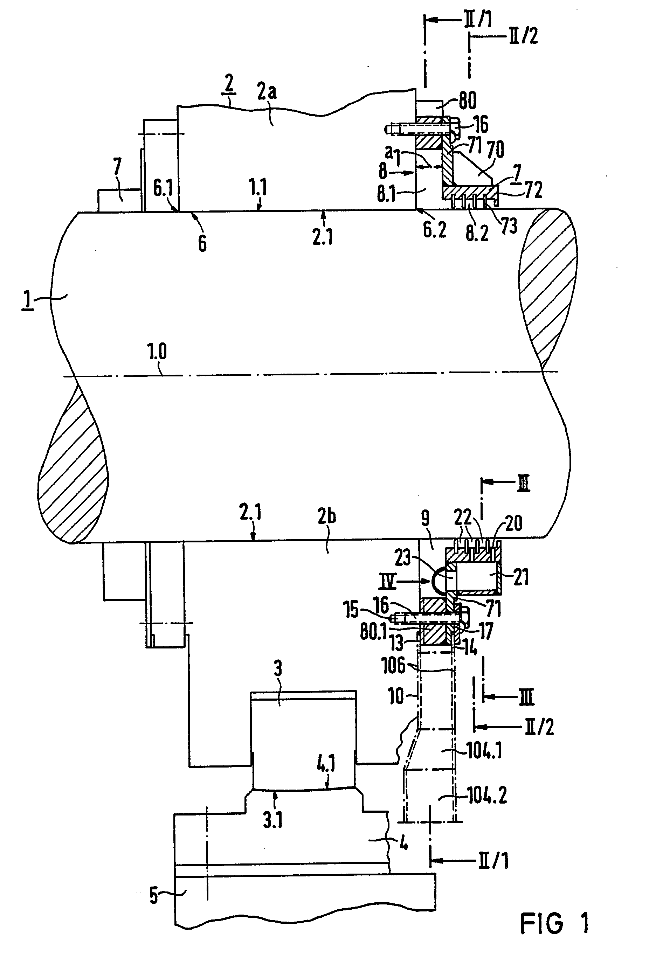

Die Welle 1 mit Wellenachse 1.0 einer nicht näher dargestellten Dampfturbine (siehe Fig. 1) ist in einem als Radiallager ausgebildeten Gleitlager 2 gelagert und hat im dargestellten Ausführungsbeispiel einen Durchmesser von 250 mm, was bei einer Umdrehungszahl von 3000 min$^{-1}$ einer Umfangsgeschwindigkeit von $\approx$ 40 m . Sek$^{-1}$ entspricht. Bei derartig hohen Wellenumfangsgeschwindigkeiten stellen die Ölabführung im Stirnseitenbereich des Gleitlagers 2 und die Wellendichtung ein besonderes Problem dar. Die Gleitfläche der Welle 1 ist mit 1.1, die Gleitflächen des Gleitlagers sind mit 2.1 bezeichnet. Letzteres besteht aus einer oberen und einer unteren Lagerschale 2a, 2b, welche an ihrem Innenumfang die Gleitflächen 2.1 aufweisen und insbesondere in einer axialen Teilfuge zusammengeflanscht sind (nicht dargestellt). Ein ebenfalls axial geteilter Lagerbügel mit einer Lagerbrücke 3 umfaßt die beiden Lagerschalen; er ist in seinem unteren Bereich mittels kugelig-konvexer Einstellflächen 3.1 an entsprechenden kugelig-konkaven Gegenflächen 4.1 eines Lagerpodestes 4 mit sogenannter kugeliger Einstellmöglichkeit für das Gleitlager 2 aufgelagert, wobei das Podest 4 wiederum auf einem nicht näher dargestellten Fundamentriegel 5 verankert ist. Die Lagerschalen 2a, 2b sind in der Nähe ihres Innenumfanges mit nicht ersichtlichen Ölkanälen versehen, welche in den Lagerspalt 1.1-2.1 mündende Ölauslässe aufweisen, wobei das den Ölkanälen zuströmseitig zugeführte Drucköl durch die Auslässe in den Lagerspalt gleichmäßig über den gesamten Umfang der Welle 1 gelangt. Auf die besondere Art der Ölkanäle kommt es im Rahmen der vorliegenden Erfindung nicht an, und ebenso auch nicht darauf, ob es sich um ein Zweikeillager, ein Dreikeillager o. dgl. handelt. Es kommt lediglich darauf an, daß das dem Schmierspalt 6 zwischen den Gleitlagerflächen 2.1 und den Wellenumfangsflächen 1.1 zugeleitete Drucköl an den Stirnseiten des Gleitlagers, also an den Stellen 6.1 und 6.2, austritt bzw. herausquillt und an den Stirnseiten der Welle möglichst leckfrei und ohne Staubildung zügig abgeführt wird. Bei dem Lageröl kann es sich auch um solches der Wellenanhebevorrichtung handeln, welches in den Spalt 6 im unteren Bereich der Gleitlagerflächen 2.1 eingeleitet wird und dazu dient, die Lagerreibung klein zu halten, wenn die Welle aus dem Stillstand auf Turn-Drehzahl oder von der Turn-Drehzahl auf Betriebs-Drehzahl gebracht wird, wobei ab einer bestimmten Wellendrehzahl das Drucköl der Wellenanhebevorrichtung nicht mehr erforderlich ist, weil die Einschmierung der Welle im Schmierspalt aufgrund eines hydrodynamischen Druckaufbaues ausreicht. Auf jeden Fall ist der Öldurchsatz erheblich, weil das Lageröl zwecks Verzögerung seiner Alterung nicht zu warm werden darf und deshalb einen Kühlölanteil enthält.

Näher betrachtet wird im folgenden der rechte Stirnseitenbereich des Gleitlagers 2 nach Fig. 1 (der linke Stirnseitenbereich kann gleichartig oder ähnlich ausgebildet sein). Der von den Wellendichtungen 7 (im linken Teil der Fig. 1 in diese nur umrißhaft dargestellt) umgrenzte Raum ist generell mit 8 bezeichnet; ein Teil dieses Raumes 8 besteht aus einem Ölsammel-Ringkanal 8.1, welcher die Welle 1 auf einer begrenzten axialen Länge a₁, im vorliegenden Falle 20 mm, umgibt und welcher über eine im unteren Bereich der Welle 1 angeordnete Ölaustrittsöffnung 9 in eine Ölauffangeinrichtung 10 mündet, welche über einen Ablaufkanal auf nicht näher dargestellte Weise mit dem Ölbehälter in Verbindung steht. Dabei kann z. B. das Lageröl von der Ölauffangeinrichtung zunächst in das Lagergehäuse und von diesem mit Gefälle in den Ölsammelbehälter geleitet werden, wie es nach dem Stande der Technik bekannt ist (nicht dargestellt).

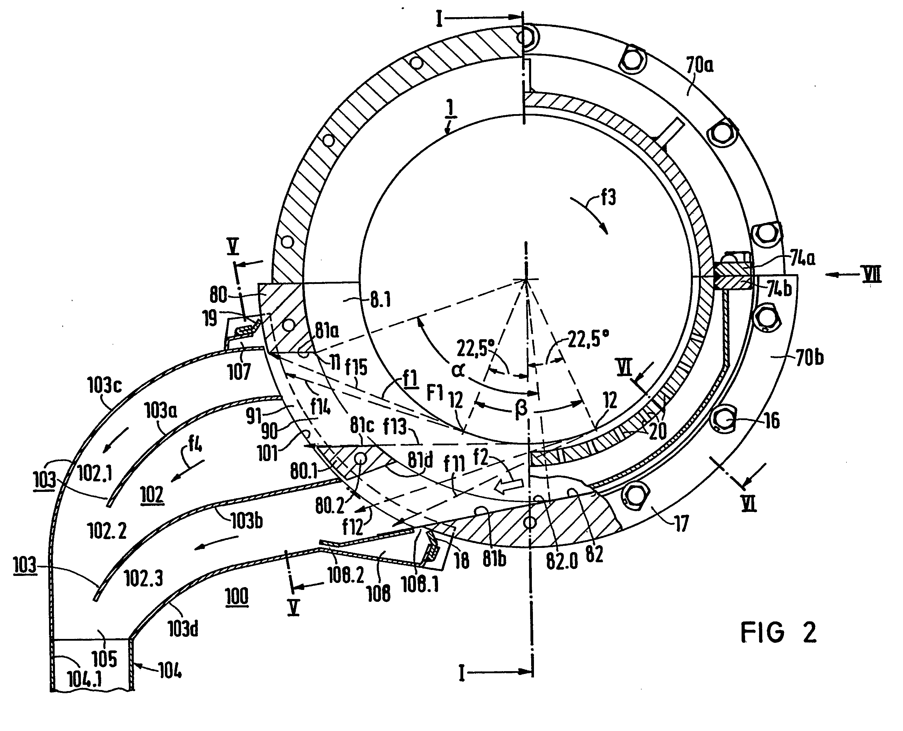

Fig. 2 zeigt nun, daß zur Bildung der Ölaustrittsöffnung 9 die ringförmige Außenumfangswand 80 des Ölsammel-Ringkanals 8.1 auf einem Bogenstück in Form eines schlitzförmigen Öffnugsbogens 90 ausgespart ist, welcher in Umfangsrichtung durch die Fräskanten 81a (obere Kante), 81 b (untere Kante) begrenzt ist, wobei die obere Kante 81a praktisch horizontal verläuft und die untere Kante 81b einen Neigungswinkel von 10° zur Horizontalen aufweist derart, daß der durch gestrichelte Pfeile f1 schematisch angedeutete Ölspritzfächer F1 und der bei niedrigen Drehzahlen aus dem Ringkanal 8.1 fließende Ölstrom (siehe Hohlpfeil f2) ohne Strömungsumwege in den nachgeschalteten Ölauffangkasten 100 geleitet werden kann. Das gleiche gilt für die oberen und unteren Begrenzungskanten 81c, 81d eines stehenbleibenden prismatischen Teilstücks 80.1 der Außenumfangswand 80, welches als Abstandshalteelement bei der Befestigung des Ölauffangkastens 100 (vgl. auch Fig.1) dient und mit einer Durchgangsbohrung 80.2 für eine Befestigungsschraube 16 (siehe Fig. 1, 2) versehen ist. Dieses Teilstück 80.1 behindert den Öltransport innerhalb des Ölspritzfächers F1 praktisch nicht und hilft mit, ihn in Teilstrahlen zu unterteilen.

Der Öffnungsbogen 90 überstreicht einen Umfangswinkelbereich $\alpha \approx 75°$ der Welle 1, welcher wenigstens beim geodätisch tiefsten Punkt 82.0 der Ringkanal-Außenkontur 82 beginnt und sich - in Wellendrehrichtung f3 gesehen - wenigstens bis zu jener Stelle 11 der Ringkanalaußenkontur 82 erstreckt, die möglichst nahe an der Fläche der Lagerschalen-Teilfuge 200 liegt. Schematisch ist der Ölspritzfächer F1 mit einem höchsten Punkt der Auftreffzone des bei der größten Betriebsdrehzahl der Welle 1 von deren Unterseite etwa im Umfangswinkelbereich $\beta$ abgeschleuderten Ölspritzfächers F1 eingezeichnet, ohne auf diese Fächer-Konfiguration beschränkt zu sein. Der Umfangswinkelbereich $\beta$ an der Wellenunterseite beträgt im dargestellten Ausführungsbeispiel etwa 45°, und zwar jeweils etwa 22,5° beidseits der vertikalen Wellenachsebene, ohne auf diese Werte fixiert zu sein. Die Werte für $\alpha$ und $\beta$ würden sich vergrößern, wenn die Teilfuge in Richtung f3 gedreht würde und damit eine größere Austrittsöffnung möglich wäre. Man erkennt, daß die Ölstrahlfußpunkte 12 an der Wellenoberfläche mit zunehmender Umfangsgeschwindigkeit der Welle 1 in Drehrichtung sich verlagern, so daß sich die schematisch angedeutete Auffächerung, beginnend bei dem schräg nach unten gerichteten Ölstrahl f11 bis hin zu dem schräg nach oben gerichteten Ölstrahl f15 ergibt. Das Drucköl der Wellenanhebevorrichtung oder beim Turnen der Welle fließt gemäß Pfeil f2 mit geringerer Geschwindigkeit, wenn auch mit großem Mengenstrom, in den unteren Einlaufbereich des Ölauffangkastens 100.

An den Öffnungsbogen 90 ist nun der schon erwähnte Ölauffangkasten 100 mit einer entsprechend dem Auslaßquerschnitt 91 bemessenen Zuströmöffnung 101 dichtend angeschlossen, worauf wieter unten im einzelnen noch eingegangen wird. Zur Unterteilung des Ölspritzfächers F1 und Umleitung seiner einzelnen Ölsträhnen f1 bzw. f11 bis f15 sowie auch zur Umleitung des Fließöles gemäß Strömungspfeil f2 ist der Ölströmungsraum 102 des Ölauffangkastens 100 mittels tangential-bogenförmig verlaufender Leitwände 103a bis 103d in mehrere parallel geschaltete Ölströmungskanäle, im vorliegenden Falle die drei zueinander parallel geschalteten Kanäle 102.1, 102.2, 102.3, unterteilt. Dabei sind die Leitwände 103a und 103b interne Leitwände, die Leitwände 103c und 103d dagegen externe Leitwände, die das Gesamtvolumen des Ölströmungsraumes 102 und der beiden äußeren Ölströmungskanäle 102.1 und 102.3 nach außen begrenzen. Der Ölströmungsraum 102 mit seinen Ölströmungskanälen 102.1 bis 102.3 mündet in ein nach unten gerichtetes Übergangsstück 104, welches an der Mündung 105 des Auffangkastens 100 angeschweißt ist. In Wellenachsrichtung 1.0 hat der Ölauffangkasten entsprechend der geringen Breite des Ringkanals 8.1 eine nur geringe Erstreckung; es ist ein flacher Kasten, wie es der planparallele Verlauf seiner beiden aus Blech bestehenden Stirnwände 106 zeigt.

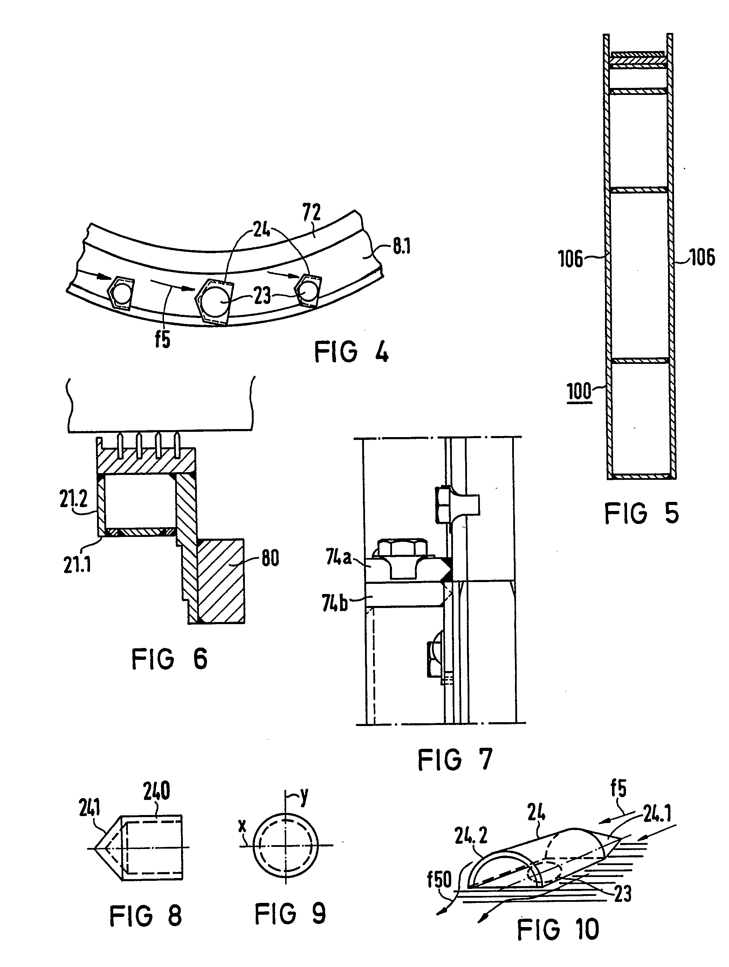

Aus Fig. 2 erkennt man, daß der Ölströmungsraum 102 und besonders der mittlere Ölströmungskanal 102.2 in Ölströmungsrichtung (Pfeile f4) von Querschnitt der Zuströmöffnung 101 bis hin zum Anschluß an das Abströmkanalstück 104 sich stetig verjüngt. Damit werden die Ölsträhnen f11 bis f15 in Richtung der Pfeile f4 allmählich zusammengeführt, so daß der Ölströmungsraum 102 am Anschluß 105 weitgehend von Öl gefüllt ist. Unter tangential-bogenförmigem Verlauf der Leitwände 103a bis 103d (insgesamt mit 103 bezeichnet) wird verstanden, daß sie mit der Tangentialrichtung der Ölstrahlen f1 oder Ölstrom f2 weitgehend gleichgerichtet sind und so der Einleitung des Lageröls in den Ölauffangkasten möglichst geringer Strömungswiderstand entgegengesetzt wird, wobei dann anschließend an diesen Ölauffangbereich im Ölumlenkbereich die bogenförmige Krümmung der Leitwände 103 zu einer Umlenkung nach unten - insbesondere, wie dargestellt, in die vertikale Richtung - erfolgt. Naturgemäß wäre auch eine Umlenkung in eine Richtung schräg nach unten möglich. Im Anschluß an die Umlenkstrecke des Ölauffangkastens 100 folgt dann, wie es Fig. 1 zeigt, ein Übergangsstück 104 zum Anschluß an den Ablaufkanal mit seinem größeren Kanalquerschnitt 104.2. Es ist, wie dargestellt, zweckmäßig, den Ölauffangkasten 100 in Ölströmungsrichtung zu verengen; man erhält so eine Kastenkontur nach Art eines gekrümmten Schalltrichters. Eine Verengung durch Annäherung der beiden Stirnwände 106 dagegen ist nicht zweckmäßig, weil ihre Planparallelität aus Gründen einer präzisen Montage und Halterung erwünscht ist. Im übrigen ist der Ölauffangkasten 100, wie es Fig. 5 verdeutlicht, aus dünnen Blechen (2 mm) in Schweißkonstruktion aufgebaut. Um einen dichtenden Anschluß des Ölauffangkastens 100 an den Ölsammelringkanal 8.1 zu erreichen, sind die beiden Stirnwände 106 des Ölauffangkastens 100 mit ihrem bogenförmigen Randbereich in Taschenräume 13, 14 eingeschoben, wobei der Taschenraum 13 durch eine entsprechende Ausfräsung an der Stirnseite der unteren Lagerschale und die gegenüberliegende Stirnfläche des stehengebliebenen Wandstückes 80.1 gebildet wird. Die gegenüberliegende Tasche 14 wird durch eine bogenförmige Ausfräsung bzw. einen abgesetzten Rand 14 und eine im Abstand der Wandstärke der Stirnwände 106 gegen die ringförmige Stirnwand 71 von den Befestigungsschrauben 16 gehaltenen bogenförmigen Leiste 17 gebildet. Die Befestigungsschraube 16 nach Fig. 1 sitzt auf demselben Lochkreis wie die übrigen jeweils in Gewindesacklöcher 15 der Lagerschale 2 eingeschraubten Befestigungs schrauben 16 für die obere und untere Hälfte 70a, 70b des Winkelringes 70, dessen beide Hälften 70a, 70b mittels an die beiden Hälften der Ringwand 72 angeschweißter Flansche 74a, 74b (Fig. 2 und 7) dichtend zusammengespannt sind. Durch die gewählten kleinen Spiele im Bereich der Taschen 13, 14 läßt sich ein öldichter Anschluß des Ölauffangkastens in diesem Bereich erzielen. In Umfangsrichtung, d. h. an den Schmalseiten des Ölauffangkastens 100, erfolgt die Abdichtung gummielastisch mittels Dichtungsleisten 18 im unteren Bereich und 19 im oberen Bereich des Ölauffangkastens 100. Die untere Dichtungsleiste 18 ist in einer Aufnahmetasche einer etwa L-förmig gebogenen Umfangswand einer Teilkammer 108 angeordnet, deren Kammerraum im Grundriß etwa dreieckförmig ist, zur Ölanströmrichtung hin eine Einlaßöffnung 108.1 sowie zur Ölabströmrichtung hin eine Auslaßöffnung 108.2 aufweist. In dieser Teilkammer 108 wird Lecköl aus den Taschen 13, 14 über die Einlaßöffnung 108.1 aufgenommen und über die Auslaßöffnung 108.2 in den Hauptstrom wieder abgegeben. Die obere Dichtungsleiste 19 ist entsprechend an dem Ende des freien Schenkels einer etwa L-förmig gebogenen Umfangswand, und zwar ebenfalls in einer Aufnahmetasche, der oberen Teilkammer 107 gehalten. Beide Dichtungsleisten 18, 19 werden in eingebautem Zustand mit Vorspannung gegen die Außenumfangswand 80 gedrückt, so daß sie an dieser elastisch-dichtend, wie dargestellt, anliegen. Die obere Teilkammer ist mit 107 bezeichnet; in sie eingespritztes Lageröl fließt auf Grund der Schwerkraft in den Hauptstrom zurück.

Wie eingangs bereits erläutert, läßt sich die Bewegungsenergie des Ölstromes f2 als Antriebsenergie für eine sehr wirksame Leckölabsaugung ausnutzen. Zur Erläuterung dessen sei zunächst auf die Wellendichtung 7 in Fig. 1 eingegangen.

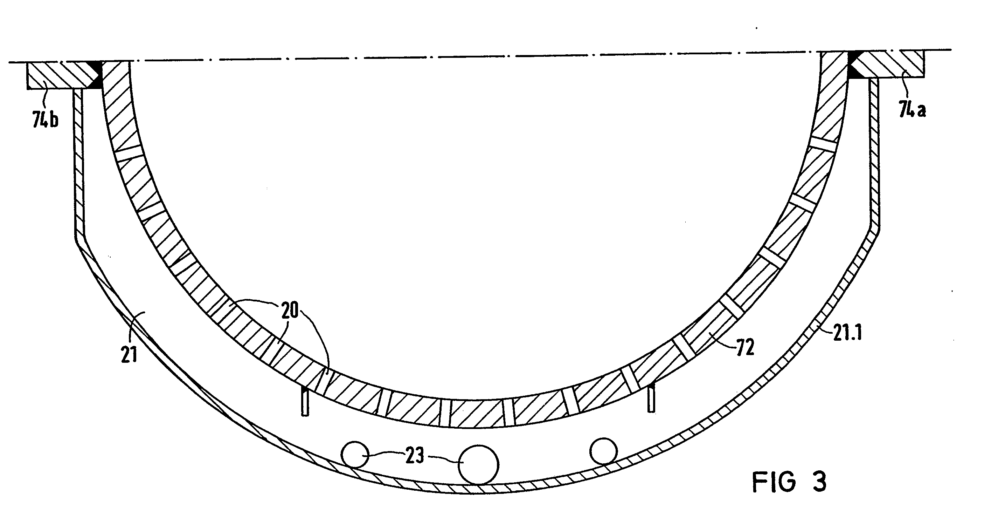

Die Dichtungskammer ist mit 8.2 bezeichnet; in ihr befinden sich die Dichtungskränze 73, die mit ihren Dichtungsspitzen die Welle 1 mit engem Spalt umfassen. Dargestellt sind vier axial zueinander beabstandete Dichtungskränze 73. Die Dichtungskammer 8.2 ist - wie ersichtlich - dem Ölsammel-Ringkanal 8.1 vorgelagert. Die Dichtungskammer 8.2 kommuniziert nun über eine Vielzahl von Ölablaufbohrungen 20 (siehe insb. den unteren Teil der Fig. 1, den rechten Teil der Fig. 2 und Fig. 3) mit einer Lecköl-Sammelkammer 21, welche - wie es Fig. 3 zeigt - durch eine bogenförmige Umfangswand 21.1 und eine der Bogenkontur entsprechende Stirnwand 21.2 (Fig. 1 und Fig. 6) gebildet wird. Die Umfangswand 21.1 umfaßt, ausgehend von den beiden unteren Flanschen 74b der unteren Winkelringhälfte 70b, praktisch die gesamte untere Hälfte des Außenumfanges der Ringwand 72. Die Ölablaufbohrungen 20 sind in der unteren Hälfte der Ringwand 72 in den Zwischenräumen 22 zwischen den Dichtungskränzen bzw.-spitzen 73 angeordnet und verlaufen bevorzugt - wie dargestellt -radial. Umfangswand 2.1 und Stirnwand 21.2 sind miteinander und mit den beiden Schenkeln 71, 72 des Winkelringes 70 verschweißt. Die Lecköl-Sammelkammer 21 mündet nun über axial orientierte Absaugbohrungen 23 in einen Sog erzeugende Treibdüsen, welche sich in Form von Saughütchen 24 im Ölablaufstrom f2 befinden. Diese Saughütchen 24 bestehen, vgl. insb. Fig. 10, aus der Halbschale eines Hohlkörpers, im vorliegenden Falle einer einseitig eine Anströmspitze aufweisenden Hohlzylinderhälfte. Wesentlich ist, daß in Anströmrichtung f5 des Ölablaufstromes eine konische oder keilförmige Anströmspitze 24.1 vorhanden ist und der Halbschalen-Mantel 24.2 die Öffnung der Absaugbohrungen 23 gegen direkte Anströmung überdacht und zur Abströmrichtung f50 des Ölablaufstromes geöffnet ist. Die Saughütchen müssen nicht unbedingt ein halbschalenförmiges Gewölbe aufweisen; entscheidend ist vielmehr, daß sie einen Hohlraum bilden, der gegen die direkte Anströmung durch den Ölablaufstrom abgeschirmt ist, so daß durch eine örtliche Erhöhung der Strömungsgeschwindigkeit am Außenumfang der Saughütchen in bezug auf deren Innenraum, der ja mit den Saugbohrungen 23 kommuniziert, ein Sog ausgeübt wird. Fig. 8 und 9 verdeutlichen ein geeignetes Herstellungsverfahren für die Saughütchen aus einem zylindrischen Vollkörper 240, welcher hohlgebohrt wird und an seinem einen Ende mit einer insbesondere konischen Anströmspitze 241 versehen wird. Der Hohlkörper wird dann in zwei vorzugsweise symmetrische Hälften aufgeteilt, wobei der Trennschnitt längs der Koordinate x oder der Koordinate y erfolgen kann. Die Saughütchen 24 könnten aber auch aus einem ebenen Blech mittels Kaltverformung in einer Presse hergestellt werden.

Fig. 3 und Fig. 4 zeigen noch die Anordnung der Saugbohrungen 23 im unteren Bereich der Lecköl-Sammelkammer 21 und (Fig. 4) die Zuordnung der Saughütchen 24 zu diesen Absaugbohrungen 23 in einem Grundriß.

## Ansprüche

1. Einrichtung zur lecköl-freien Lageröl-Abführung an Gleitlagern (2) für umlaufende Wellen (1) hochtouriger Machinen, insbesondere solchen für Turbomaschinen,
- mit berührungsfreier Wellendichtung (7) gegen Austritt des den Gleitlagerflächen (1.1, 2.1) unter Druck zugeführten Lageröls nach außen im Bereich der beiden Lagerstirnseiten
- und mit einem wenigstens an einer Seite des axial geteilten Lagers zwischen Wellendichtug (7) und Lagerstirnwand (6.1, 6.2) angeordneten Ölsammel-Ringkanal (8.1), der über wenigstens eine Ölaustrittsöffnung (9) in eine Ölauffangeinrichtung (10) mündet, welche mit dem Lagerölablauf in Verbindung steht,

**dadurch gekennzeichnet,**

daß zur Bildung der Ölaustrittsöffnung (9) die Außenumfangswand (80) des Ölsammel-Ringkanals (8.1) auf einem Bogenstück in Form eines schlitzförmigen Öffnungsbogens (90) ausgespart ist, daß der Öffnungsbogen einen Umfangswinkelbereich ($\alpha$) der Welle (1) überstreicht, der beim geodätisch tiefsten Punkt (82.0) der Ringkanal-Außenkontur oder - in Wellendrehrichtung gesehen - davor beginnt und sich - in Wellendrehrichtung (f3) gesehen - höchstens bis zu jener Stelle der Ringkanal-Außenkontur (82) erstreckt, die durch die Lagerschalen-Teilfuge begrenzt ist, daß an den Öffnungsbogen (90) ein Ölauffangkasten (100) mit einer entsprechend dem Öffnungsbogen-Auslaßquerschnitt (91) bemessenen Zuströmöffnung (101) dichtend angeschlossen ist und daß zur Unterteilung des von der Wellenunterseite abgeschleuderten Ölspritzfächers (F1) und Umleitung seiner Ölsträhnen (f1; f11...f15) nach unten der Ölströmungsraum (102) des Ölauffangkastens (100) mittels tangential-bogenförmig verlaufender Leitwände (103a...103d) in mehrere parallel geschaltete Ölströmungskanäle (102.1...102.3) unterteilt ist, welche in ein gemeinsames, nach unten gerichtetes Übergangsstück (104) münden.

2. Einrichtung nach Anspruch 1, **dadurch gekennzeichnet,** daß der Ölströmungsraum (102) und zumindest ein Teil (102.2) der Ölströmungskanäle (102.1...102.3) in Ölströmungsrichtung vom Querschnitt der Zuströmöffnung (101) bis hin zum Anschluß an das Übergangsstück (104) sich stetig verjüngen.

3. Einrichtung nach Anspruch 2, **dadurch gekennzeichnet,** daß sich die Kontur der in Wellenachsrichtung (1.0) orientierten Grundflächen (106) des Ölauffangkastens (100) nach Art eines gekrümmten Schalltrichters verjüngt.

4. Einrichtung nach einem der Ansprüche 1 bis 3, **dadurch gekennzeichnet,** daß der Ölauffangkasten (100) an seinen Schmalseiten mittels gummielastischer Dichtungsleisten (18 bzw. 19) abgedichtet ist, welche im montierten Zustand des Ölauffangkastens (100) unter Vorspannung gegen die Außenumfangswand (80) des Ölsammel-Ringkanals (8.1) drückbar sind.

5. Einrichtung nach Anspruch 4, **dadurch gekennzeichnet,** daß eine untere Dichtungsleiste (18) in einer Aufnahmetasche einer etwa L-förmig gebogenen Umfangswand einer Teilkammer (108) angeordnet ist, deren Kammerraum im Grundriß etwa dreieckförmig ist, zur Ölströmrichtung hin eine Einlaßöffnung (108.1) sowie zur Ölabströmrichtung hin eine Auslaßöffnung (108.2) aufweist, wobei durch den vom Ölstrom (f2) erzeugten Sog das sich im Kammerraum ansammelnde Lecköl absaugbar ist.

6. Einrichtung nach einem der Ansprüche 1 bis 5, **dadurch gekennzeichnet,** daß der Ölauffangkasten (100) direkt an eine Ölablaufleitung zum Ölsammelbehälter angeschlossen ist.

FIG 1

FIG 2

EP 0 306 634 A2

FIG 3

FIG 4

FIG 5

FIG 6

FIG 7

FIG 8

FIG 9

FIG 10

II/1

7

8

1.0

II/2    II/1

1

10

2a

FIG 11